# EUROPEAN PATENT APPLICATION

(11) **EP 4 358 262 A1**
(43) Date of publication of application: **24.04.2024**
(21) Application number: 22919952.6
(22) Date of filing: 30.11.2022
(51) Int. Cl.: H01M 50/342, H01M 10/613, H01M 10/6557

(54) **BATTERY AND ELECTRICAL DEVICE**

(30) Priority: 12.01.2022 WO PCT/CN2022/071536
(71) Applicant: Contemporary Amperex Technology Co., Limited, Ningde City, Fujian 352100 (CN)
(72) Inventor: QIAN, Ou, Ningde City, Fujian 352100 (CN); YANG, Piaopiao, Ningde City, Fujian 352100 (CN); LI, Yao, Ningde City, Fujian 352100 (CN); CHEN, Xiaobo, Ningde City, Fujian 352100 (CN)
(74) Representative: Gong, Jinping
(86) International application number: PCT/CN2022/135647
(87) International publication number: WO 2023/134319

(57) **Abstract**

Embodiments of the present application provide a battery and an electrical device. The battery includes: a battery cell, a first wall of the battery cell being provided with a pressure relief mechanism; a thermal management component configured to regulate the temperature of the battery cell, the thermal management component being attached to a second wall of the battery cell, and the second wall being different from the first wall; and a bus component configured to be electrically connected to an electrode terminal of the battery cell, the electrode terminal being arranged on a third wall of the battery cell, and the third wall being different from the first wall. Therefore, by arranging the bus component and the thermal management component on a different side from the pressure relief mechanism, not only can emissions from the battery cell be kept away from the bus component when the pressure relief mechanism is actuated, preventing the battery from short-circuiting, but the emissions from the battery cell can also be prevented from damaging the thermal management component, so that the thermal management component can continuously and normally regulate the temperature of the battery cell, improving the safety of the battery.

## Description

### CROSS-REFERENCE TO RELATED APPLICATION

The present application claims priority to PCT Patent Application No. PCT/CN2022/071536, entitled "BOX OF BATTERY, BATTERY, ELECTRICAL APPARATUS, AND METHOD AND APPARATUS FOR PREPARING BATTERY", filed on January 12, 2022, which is incorporated herein by reference in its entirety.

### TECHNICAL FIELD

The present application relates to the technical field of batteries, and in particular, to a battery and an electrical device.

### BACKGROUND

With the continuous advancement of battery technology, various new energy industries using batteries as energy storage devices have developed rapidly. In the development of the battery technology, in addition to improving the performance of batteries, safety is also an issue that cannot be ignored. If the safety of the battery cannot be guaranteed, the battery cannot be used. Therefore, how to enhance the safety of the batteries is an urgent technical problem to be solved in the battery technology.

### SUMMARY OF THE INVENTION

Embodiments of the present application provide a battery and an electrical device, which can improve the safety of the battery.

In a first aspect, provided is a battery, including a battery cell, a bus component and a thermal management component. A first wall of the battery cell is provided with a pressure relief mechanism; the thermal management component is configured to regulate the temperature of the battery cell, the thermal management component is attached to a second wall of the battery cell, and the second wall is different from the first wall; and the bus component is configured to be electrically connected to an electrode terminal of the battery cell, the electrode terminal is arranged on a third wall of the battery cell, and the third wall is different from the first wall.

In the embodiments of the present application, when the battery cell is subjected to thermal runaway, the emissions discharged from the battery cell through the pressure relief mechanism will be discharged in a direction away from the thermal management component. Therefore, the emissions are less likely to break through the thermal management component. The thermal management component can cool the battery cell that is subjected to thermal runaway, avoiding thermal diffusion, and enhancing the safety of the battery. In addition, the bus component of the battery is electrically connected to the electrode terminal of the battery cell, the electrode terminal is arranged on the third wall of the battery cell, and the third wall is also different from the first wall. In this way, when the pressure relief mechanism is actuated, the emissions from the battery cell are kept away from the bus component, preventing the emissions from causing a short circuit between bus components, thereby preventing the battery from short circuiting and improving the safety of the battery.

In some embodiments, the second wall is different from the third wall.

In the embodiments of the present application, since the electrode terminal and the bus component are arranged on one side of the third wall, when the thermal management component is arranged on the same side, there is a need to arrange the thermal management component in a region avoiding the bus component. Therefore, in order to arrange the thermal management component more conveniently, the thermal management component may be attached to a wall different from the third wall, so that there is no need to avoid the bus component, which is more convenient for mounting, and the contact area between the thermal management component and the battery cell is also larger, which is more conducive to temperature regulation.

In some embodiments, the area of the second wall is greater than or equal to that of the first wall; and/or the area of the second wall is greater than or equal to that of the third wall.

In the embodiments of the present application, the area of the second wall is set to be not less than the first wall and/or the third wall, so that it is possible to ensure that the second wall will not be too small, and thus ensure that the contact area between the second wall and the thermal management component will not be too small due to the limitation of the area of the second wall. Therefore, the temperature regulation effect of the battery cell can be ensured.

In some embodiments, the second wall is a wall with the largest area of the battery cell.

In the embodiments of the present application, by defining the second wall as a wall with the largest area of the battery cell, the highest temperature regulation efficiency for the battery cell can be achieved in the most convenient manner.

In some embodiments, the battery further includes: a box, including an electrical cavity and a collection cavity, wherein the electrical cavity is configured to accommodate the battery cell and the thermal management component, and the collection cavity is configured to collect emissions from the battery cell when the pressure relief mechanism is actuated.

In the embodiments of the present application, when the battery cell is subjected to thermal runaway, the emissions from the battery cell can be collected by the collection cavity, so as to prevent the emissions from the battery cell from being directly released to the outside of the box, thereby preventing other components from being damaged by the explosive force generated when the pressure relief mechanism is actuated, and thus improving the safety of the battery.

In some embodiments, the box further includes a first box wall arranged opposite and spaced apart from the first wall, there is a gap between the first wall and the first box wall, and the gap is configured to form at least part of the collection cavity.

In the embodiments of the present application, the gap between the first wall and the first box wall forms at least part of the collection cavity, so that it is possible that the emissions from the battery cell are collected by using the collection cavity without adding additional components, the structure of the battery is simplified, the volume utilization rate of the battery is improved, the collection efficiency of the emissions from the battery cell is improved, and the safety of the battery is thus improved.

In some embodiments, a minimum distance between the first wall and the first box wall is greater than or equal to 7 mm.

In the embodiments of the present application, the minimum distance between the first wall and the first box wall is defined to be greater than or equal to 7 mm, so that a sufficient deformation space can be reserved for the pressure relief mechanism, so as to enable the emissions to be released from the battery cell in a timely manner to reduce the internal pressure or temperature of the battery cell, and a sufficient release space can also be reserved for the emissions released from the battery cell when the pressure relief mechanism is actuated, so as to prevent the battery cell from contacting with adjacent battery cells due to excessive accumulation of the emissions from the battery cell, which would affect the adjacent battery cells, thereby improving the safety of the battery.

In some embodiments, the minimum distance between the first wall and the first box wall is between 7 mm and 25 mm.

In the embodiments of the present application, by defining the minimum distance between the first wall and the first box wall between 7 mm and 25 mm, not only can the influence of external force on the battery cell be reduced, but the volume utilization rate and the energy density of the battery can also be increased while reserving a sufficient space for the actuation of the pressure relief mechanism and the emissions released from the battery cell.

In some embodiments, the battery further includes: an isolation component, wherein the isolation component is attached to the first wall, and the isolation component is configured to isolate the electrical cavity from the collection cavity. By isolating the electrical cavity from the collection cavity by means of the isolation component, it is possible to prevent at least part of the emissions from entering the electrical cavity from the collection cavity, avoiding thermal diffusion.

In some embodiments, the box further includes a second box wall, the second box wall being configured to be fixed to the third wall such that the battery cell is fixed to the box.

In the embodiments of the present application, the fixing of the battery cell can be realized by the fixing the second box wall to the third wall, so that not only can the shaking of the battery cell in the box due to the influence of the external environment be avoided, improving the stability and safety of the battery, but a gap between the first wall of the battery cell and the wall of the box can also be formed without adding other parts and components. This gap may be configured to form at least part of the collection cavity to collect the emissions from the battery cell, increasing the volume utilization rate and the energy density of the battery.

In some embodiments, the third wall is fixed to the second box wall via a binder.

In the embodiments of the present application, since the binder has the advantages of low cost and easy availability, fixing the third wall to the second box wall via the binder reduces the fixing difficulty and reduces the production cost of the battery. Moreover, in the actual production process of the battery, the binder may be coated on a partial region of the third wall, and may also be coated on a partial region of the second box wall, increasing the flexibility of fixing between the third wall and the second box wall.

In some embodiments, the battery includes a plurality of rows of battery cells arranged in a first direction, and each row of battery cells of the plurality of rows of battery cells includes at least one battery cell arranged in a second direction, the second wall the first direction being perpendicular to the second direction and the second wall. In this way, the plurality of battery cells in the battery are arranged in an array, so that the assembly of the battery is facilitated, and the space utilization rate of the plurality of battery cells in the battery can also be improved.

In some embodiments, the thermal management component is attached to the second wall of the at least one battery cell of at least one row of battery cells of the plurality of rows of battery cells.

In the embodiments of the present application, by attaching the thermal management component to the second wall of the at least one battery cell of at least one row of battery cells of the plurality of rows of battery cells, the production cost of producing the battery can be reduced.

In some embodiments, the battery cell includes two second walls oppositely arranged in the first direction, and on two sides of at least one row of battery cells of the plurality of rows of battery cells in the first direction, provided are the thermal management components attached to the two second walls of the at least one battery cell respectively. In this way, the temperature of one row of battery cells can be adjusted by two thermal management components at the same time, so that it is possible to improve the temperature regulation efficiency and improve the safety of the battery.

In some embodiments, among the plurality of rows of battery cells, at least two adjacent rows of battery cells are provided therebetween with the same thermal management component. In this way, the temperature regulation effect can be improved.

In some embodiments, the battery includes a plurality of thermal management components arranged in the first direction. The plurality of thermal management components can further improve the temperature regulation efficiency.

In some embodiments, the plurality of thermal management components are arranged at intervals in the first direction. In this way, not only can the volume utilization rate of the battery be improved, but the temperature regulation efficiency can also be improved.

In some embodiments, the thermal management components are each provided with a heat exchange channel for accommodating a heat exchange medium, and the heat exchange channels of the plurality of thermal management components are in communication with each other.

In the embodiments of the present application, the plurality of thermal management components are in communication with each other, so that management and control are facilitated, and the integration and safety of the battery are improved; moreover, when the temperature of some thermal management components in the battery changes greatly, heat exchange can be realized by means of the heat exchange channels, so that the temperature difference between the plurality of thermal management components is small, and the temperature regulation efficiency is improved.

In some embodiments, the plurality of thermal management components include a first thermal management component and second thermal management component adjacent to each other, wherein the first thermal management component includes a first connecting pipe in communication with the heat exchange channel, the second thermal management component includes a second connecting pipe in communication with the heat exchange channel, and the first connecting pipe and the second connecting pipe are connected to each other, such that the heat exchange channel of the first thermal management component and the heat exchange channel of the second thermal management component are in communication with each other.

In the embodiments of the present application, the heat exchange channels of the adjacent first and second thermal management components are in communication with each other by means of the first connecting pipe and the second connecting pipe, so that the difficulty of connecting the heat exchange channels can be reduced; and arranging the components for connecting the heat exchange channels together with the first thermal management component and the second thermal management component can increase the volume utilization rate of the battery, thereby increasing the energy density of the battery.

In some embodiments, the first connecting pipe is arranged in a region of the first thermal management component that is beyond a row of battery cells in the second direction, the second connecting pipe is arranged in a region of the second thermal management component that is beyond the row of battery cells in the second direction, the row of battery cells is a row of battery cells located between the first thermal management component and the second thermal management component, and the first connecting pipe and the second connecting pipe extend in the first direction and are connected to each other.

In the embodiments of the present application, by extending the first connecting pipe and the second connecting pipe in the first direction to connect same with each other, the transportation path of the heat exchange medium in the heat exchange channel of the first thermal management component and the heat exchange channel of the second heat pipe component can be shortened, so that not only the transportation efficiency of the heat exchange medium in the corresponding heat exchange channels is improved, but the volume utilization rate of the battery is also increased.

In some embodiments, the box further includes a support component configured to support the first connecting pipe and/or the second connecting pipe.

In the embodiments of the present application, the first connecting pipe and/or the second connecting pipe are supported by the support component, so that a gap can be formed between the row of battery cells located between the first thermal management component and the second thermal management component and a wall of the box. For example, a gap is formed between the first wall of the row of battery cells and any wall of the box, and this gap may be configured to form at least part of the collection cavity, so that the collection cavity collects the emissions from the battery cell. In this way, the volume utilization rate and the energy density of the battery are increased.

In some embodiments, one side of the support component in a third direction is configured to have the first connecting pipe and/or the second connecting pipe attached thereon, the third direction being perpendicular to the first direction and the second direction.

In the embodiments of the present application, by attaching the first connecting pipe and/or the second connecting pipe on one side of the support component in the third direction, the space of the battery in the third direction can be utilized to increase the volume utilization rate of the battery; and when assembling the battery, it is possible that where the first connecting pipe and the second connecting pipe have been in communication with each other, the support component is arranged to have the first connecting pipe and/or the second connecting pipe attached thereto, or that the support component is arranged to have the first connecting pipe or the second connecting pipe attached thereto first, and then the first connecting pipe communicates with the second connecting pipe, thereby increasing the flexibility of assembly.

In some embodiments, one side of the support component in the third direction is provided with an accommodating groove configured to accommodate at least part of the first connecting pipe and/or at least part of the second connecting pipe.

In the embodiments of the present application, an accommodating groove is provided on one side of the support component in the third direction to accommodate at least part of the first connecting pipe and/or at least part of the second connecting pipe, so that the support component can more stably support and fix the first connecting pipe and/or the second connecting pipe, preventing the first connecting pipe, the second connecting pipe and the row of battery cells between them from shaking in the box, thereby increasing the stability and safety of the battery.

In some embodiments, the first wall is arranged opposite to the third wall, and the second wall is connected to the first wall and the third wall; or the first wall is arranged opposite to the second wall, and the third wall is connected to the first wall and the second wall.

In the embodiments of the present application, the first wall and the third wall of the battery cell are arranged opposite to each other such that the pressure relief mechanism faces away from the bus component, so that when the pressure relief mechanism is actuated, the emissions from the battery cell can be discharged away from the bus component, reducing the influence of the emissions on the bus component and preventing the battery from short circuiting. Moreover, with the arrangement of the second wall connected to the first wall and the third wall, the three walls can be different, and then the thermal management component is on a different side from the pressure relief mechanism and the bus component, so that it is possible to prevent the pressure relief mechanism and/or the bus component in an abnormal state from adversely affecting the thermal management component.

Alternatively, the first wall and the second wall of the battery cell are arranged opposite to each other such that the pressure relief mechanism faces away from the thermal management component, so that when the pressure relief mechanism is actuated, the emissions from the battery cell can be away from the thermal management component, avoiding damage to the thermal management component to further enhance the safety of the battery. In addition, with the arrangement of the third wall connected to the first wall and the second wall, the three walls can be different, and then the bus component is on a different side from the pressure relief mechanism and the thermal management component, so that it is possible to prevent the pressure relief mechanism and/or the thermal management component in an abnormal state from adversely affecting the bus component.

In a second aspect, provided is an electrical device, including the battery described in the first aspect, the battery being configured to supply electric energy to the electrical device.

In some embodiments, the electrical device is a vehicle, a ship or a spacecraft.

### DESCRIPTION OF DRAWINGS

In order to illustrate the technical solutions of the embodiments of the present application more clearly, the drawings to be used in the description of the embodiments of the present application will be described briefly below. Obviously, the drawings described below are merely some embodiments of the present application. For those skilled in the art, other drawings can also be obtained according to these drawings without any creative effort.
Fig. 1 is a schematic structural diagram of a vehicle disclosed in an embodiment of the present application;
Fig. 2 is an exploded schematic structural diagram of a battery disclosed in an embodiment of the present application;
Fig. 3 is a schematic side view of a battery cell disclosed in an embodiment of the present application;
Fig. 4 is an exploded schematic structural diagram of a battery cell disclosed in an embodiment of the present application;
Fig. 5 is a schematic side view of a battery disclosed in an embodiment of the present application;
Fig. 6 is an exploded schematic structural diagram of a further battery disclosed in an embodiment of the present application;
Fig. 7 is a schematic cross-sectional view of the further battery disclosed in an embodiment of the present application;
Fig. 8 is an exploded schematic structural diagram of a still further battery disclosed in an embodiment of the present application;
Fig. 9 is a schematic cross-sectional view of the still further battery disclosed in an embodiment of the present application;
Fig. 10 is a partial schematic cross-sectional view of the still further battery disclosed in an embodiment of the present application;
Fig. 11 is another schematic cross-sectional view of the still further battery disclosed in an embodiment of the present application;
Fig. 12 is another partial schematic cross-sectional view of the still further battery disclosed in an embodiment of the present application;
Fig. 13 is a partial schematic view of a thermal management component disclosed in an embodiment of the present application;
Fig. 14 is a partial schematic view of the still further battery disclosed in an embodiment of the present application;
Fig. 15 is a schematic structural top view of a first thermal management component and a second thermal management component connected to each other in the still further battery disclosed in an embodiment of the present application;
Fig. 16 is a partial schematic side view of the still further battery disclosed in an embodiment of the present application;
Fig. 17 is another partial schematic view of the still further battery disclosed in an embodiment of the present application;
Fig. 18 is still another schematic cross-sectional view of the still further battery disclosed in an embodiment of the present application; and
Fig. 19 is still another partial schematic view of the still further battery disclosed in an embodiment of the present application.

In the accompanying drawings, the figures are not necessarily drawn to scale.

### DETAILED DESCRIPTION

Implementations of the present application are described in further detail below in conjunction with the drawings and embodiments. The following detailed description of the embodiments and the drawings are configured to illustrate the principles of the present application by way of example, but should not be used to limit the scope of the present application, that is, the present application is not limited to the described embodiments.

In the description of the present application, it should be noted that, unless otherwise stated, "plurality of" means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Perpendicular" is not strictly perpendicular, but within the allowable range of errors. "Parallel" is not necessarily parallel in the strict sense, and a range of errors is allowed.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the above terms in the present application may be understood according to specific circumstances.

In the present application, the battery cell may include a lithium-ion secondary battery, a lithium-ion primary battery, a lithium sulfur battery, a sodium lithium-ion battery, a sodium-ion battery or a magnesium-ion battery and so on, which will not be limited in the embodiments of the present application. The battery cell may be in a cylindrical shape, a flat shape, a cuboid shape or another shape, which is also not limited in the embodiments of the present application. The battery cells are generally classified into three types depending on the way of package: cylindrical battery cells, prismatic battery cells and pouch battery cells, which will also not be limited in the embodiments of the present application.

The battery mentioned in the embodiments of the present application refers to a single physical module including one or more battery cells to provide a higher voltage and capacity. For example, the battery mentioned in the present application may include a battery module, a battery pack, or the like. The battery generally includes a box for packaging one or more battery cells. The box can prevent liquid or other foreign matters from affecting charging or discharging of the battery cells.

The battery cell includes an electrode assembly and an electrolyte solution, and the electrode assembly is composed of a positive electrode plate, a negative electrode plate and a separator. The operation of the battery cell mainly relies on the movement of metal ions between the positive electrode plate and the negative electrode plate. The positive electrode plate includes a positive electrode current collector and a positive electrode active material layer. The positive electrode active material layer is coated on a surface of the positive electrode current collector, and the current collector not coated with the positive electrode active material layer protrudes from the current collector coated with the positive electrode active material layer and is used as a positive tab. Taking a lithium-ion battery as an example, the positive electrode current collector may be of a material of aluminum, and the positive electrode active material may be lithium cobalt oxide, lithium iron phosphate, ternary lithium or lithium manganate, etc. The negative electrode plate includes a negative electrode current collector and a negative electrode active material layer. The negative electrode active material layer is coated on a surface of the negative electrode current collector, and the current collector not coated with the negative electrode active material layer protrudes from the current collector coated with the negative electrode active material layer and is used as a negative tab. The negative electrode current collector may be of a material of copper, and the negative electrode active material may be carbon, silicon, etc. In order to ensure that no fusing occurs when a large current passes, there are a plurality of positive tabs which are stacked together, and there are a plurality of negative tabs which are stacked together. The separator may be made of polypropylene (PP), polyethylene (PE), etc. In addition, the electrode assembly may have a wound structure or a laminated structure, and the embodiments of the present application are not limited thereto.

With the development of the battery technology, it is necessary to consider many design factors, such as energy density, cycle life, discharge capacity, C-rate and other performance parameters. In addition, the safety of the battery should also be considered. For the battery, the main safety hazard comes from the charging and discharging processes. In order to improve the safety performance of the battery, a pressure relief mechanism is generally provided for the battery cell. The pressure relief mechanism refers to an element or component that is actuated to release an internal pressure or heat when the internal pressure or temperature of the battery cell reaches a predetermined threshold. The predetermined threshold may be adjusted according to different design requirements. For example, the predetermined threshold may depend on the material of one or more of the positive electrode plate, the negative electrode plate, the electrolyte solution and the separator in the battery cell. The pressure relief mechanism may take the form of an element or component that is sensitive to pressure or temperature, for example. That is, when the internal pressure or temperature of the battery cell reaches a predetermined threshold, the pressure relief mechanism is actuated, thereby creating a channel through which the internal pressure or heat can be released. Moreover, in order to manage and regulate the temperature of the battery cell, a thermal management component is usually attached to a surface of the battery cell.

In the related art, the thermal management component is usually attached to the wall of the battery cell that is provided with the pressure relief mechanism. In this way, when the battery cell is operating normally, the thermal management component can regulate the temperature of the battery cell. However, when the battery cell is subjected to thermal runaway, for example, when the pressure relief mechanism of the battery cell is actuated, the power and destructive force of the emissions released by the pressure relief mechanism of the battery cell are very large, and may even be enough to break through the thermal management component, so that the thermal management component is less effective in regulating the temperature of the battery cell (such as cooling the battery cell subjected to thermal runaway) when the battery cell is subjected to thermal runaway, which may cause thermal diffusion of the battery.

In view of this, the present application provides a battery, including a battery cell, a bus component and a thermal management component. A first wall of the battery cell is provided with a pressure relief mechanism; and the thermal management component is attached to a second wall of the battery cell, and the second wall is different from the first wall. In this way, when the battery cell is subjected to thermal runaway, the emissions discharged from the battery cell through the pressure relief mechanism will be discharged in a direction away from the thermal management component. Therefore, the emissions are less likely to break through the thermal management component. The thermal management component can cool the battery cell subjected to thermal runaway, avoiding thermal diffusion, and enhancing the safety of the battery. In addition, the bus component of the battery is electrically connected to the electrode terminal of the battery cell, the electrode terminal is arranged on the third wall of the battery cell, and the third wall is also different from the first wall. In this way, when the pressure relief mechanism is actuated, the emissions from the battery cell are kept away from the bus component, preventing the emissions from causing a short circuit between bus components, thereby preventing the battery from short circuiting and improving the safety of the battery.

The technical solutions described in the embodiments of the present application are applicable to various electrical devices using batteries. The electrical device may be a vehicle, a mobile phone, a portable device, a laptop, a ship, a spacecraft, an electric toy, an electric tool, and the like. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

In the following embodiments, for convenience of description, the electrical device being a vehicle is taken as an example for illustration.

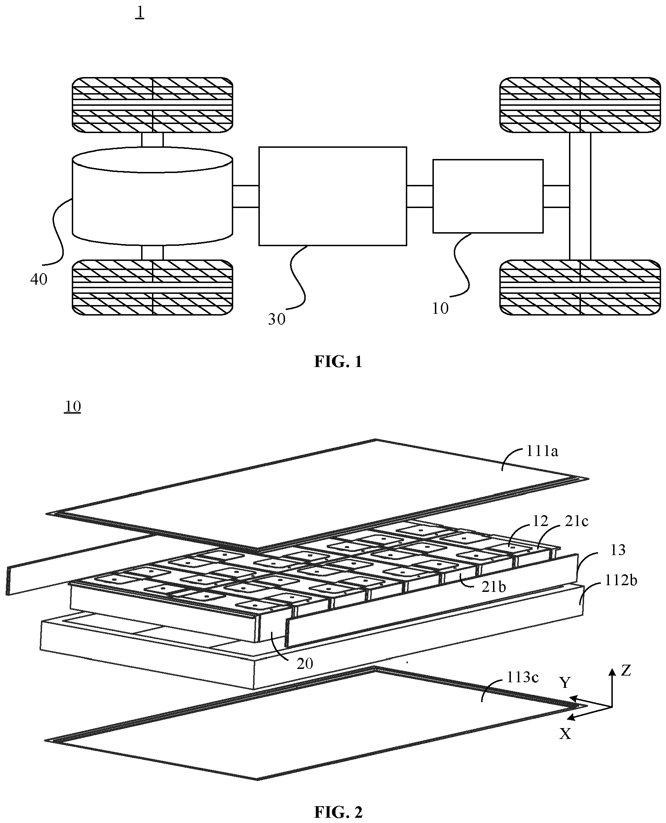

For example, Fig. 1 is a schematic structural diagram of a vehicle 1 according to an embodiment of the present application. The vehicle 1 may be a fuel vehicle, a gas vehicle or a new energy vehicle. The new energy vehicle may be an all-electric vehicle, a hybrid vehicle or an extended-range vehicle, or the like. A motor 40, a controller 30 and a battery 10 may be provided inside the vehicle 1, and the controller 30 is configured to control the battery 10 to supply power to the motor 40. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for operation power requirements of the vehicle 1 during starting, navigation and running. In another embodiment of the present application, the battery 10 can be used not only as an operation power supply of the vehicle 1, but also as a driving power supply of the vehicle 1, replacing or partially replacing fuel or natural gas to provide driving power for the vehicle 1.

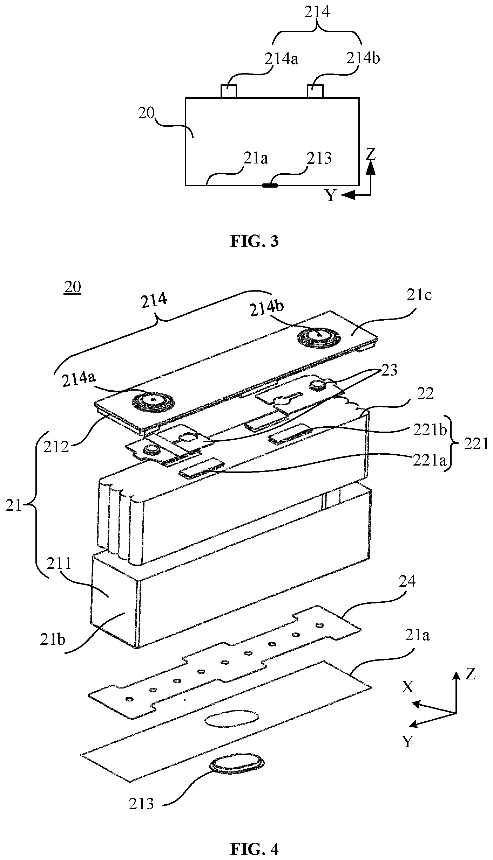

Fig. 2 shows a partial exploded schematic diagram of a battery 10 described in an embodiment of the present application. Fig. 3 shows a schematic side view of a battery cell 20 according to an embodiment of the present application.

The battery 10 shown in Figs. 2 and 3 includes a battery cell 20, a thermal management component 13 and a bus component 12. A first wall 21a of the battery cell 20 is provided with a pressure relief mechanism 213. The thermal management component 13 is configured to regulate the temperature of the battery cell 20, the thermal management component 13 is attached to a second wall 21b of the battery cell 20, and the second wall 21b is different from the first wall 21a. The bus component 12 is configured to be electrically connected to an electrode terminal 214 of the battery cell 20, the electrode terminal 214 is arranged on a third wall 21c of the battery cell 20, and the third wall 21c is different from the first wall 21a.

The battery cell 20 in the embodiments of the present application may be shaped according to actual applications. For example, the battery cell 20 may be of a polyhedron structure, which is enclosed by a plurality of walls. Therefore, the battery cell 20 may include a plurality of walls. The first wall 21a of the battery cell 20 is provided with the pressure relief mechanism 213, and the second wall 21b of the battery cell 20 faces the thermal management component 13. The first wall 21a and the second wall 21b may be any two different walls of the battery cell 20, and the first wall and the third wall 21c may also be any two different walls of the battery 20. For example, the first wall 21a and the second wall 21b may intersect or may not intersect, and the first wall 21a and the third wall 21c may also intersect or not intersect. The embodiments of the present application are not limited thereto.

It should be understood that the pressure relief mechanism 213 in the embodiments of the present application refers to an element or component that is actuated when an internal pressure or temperature of the battery cell 20 reaches a predetermined threshold so as to release the internal pressure or heat. The predetermined threshold is differently designed according to different design requirements. The predetermined threshold may depend on the material of one or more of the positive electrode plate, the negative electrode plate, the electrolyte solution and the separator in the battery cell 20. The pressure relief mechanism 213 may be directly arranged on the first wall 21a, or may be arranged separately from the first wall 21a and fixed to the first wall 21a by means of welding/pasting or the like.

It should be understood that regulating the temperature of the battery cell 20 by the thermal management component 13 may include heating or cooling the battery cell 20. For example, when the temperature of the battery cell 20 exceeds a predetermined threshold, cooling the battery cell 20 can improve the safety of the battery; and before using the battery in some regions with cold winter temperatures, heating the battery cell 20 can improve the performance of the battery.

In the embodiments of the present application, the thermal management component 13 may be attached to the second wall 21b of the battery cell 20 in different ways. For example, the thermal management component may be attached to the second wall 21b of the battery cell 20 via a binder (e.g., a thermally conductive adhesive), or the thermal management component 13 may be clamped and fixed between two adjacent battery cells 20.

It should be understood that the battery cell 20 includes at least two electrode terminals 214. The at least two electrode terminals 214 may be arranged at least on the same third wall 21c, or may be arranged on different third walls 21c. An example in which the two electrode terminals 214 of the battery cell 20 on the same third wall 21c is illustrated in Figs. 2 and 3. The bus component 12 may connect a plurality of battery cells 20 in series/parallel by means of the two electrode terminals 214. For example, the third wall 21c of the battery cell 20 is provided with a positive electrode terminal 214a and a negative electrode terminal 214b. A bus component 12 is connected to a positive electrode terminal 214a and a negative electrode terminal 214b of two adjacent battery cells 20 respectively, so as to connect the two adjacent battery cells 20 in series. For example, a bus component 12 is connected to the respective positive electrode terminals 214a of two adjacent battery cells 20 to connect the two adjacent battery cells 20 in parallel.

In the embodiments of the present application, when the battery cell 20 is subjected to thermal runaway, the emissions discharged from the battery cell 20 through the pressure relief mechanism 213 will be discharged in a direction away from the thermal management component 13. Therefore, the emissions are less likely to break through the thermal management component 13. The thermal management component 13 can cool the battery cell 20 subjected to thermal runaway, avoiding thermal diffusion, and enhancing the safety of the battery 10. In addition, the bus component 12 of the battery 10 is electrically connected to the electrode terminal 214 of the battery cell 20, the electrode terminal 214 is arranged on the third wall 21c of the battery cell 20, and the third wall 21c is also different from the first wall 21a. In this way, when the pressure relief mechanism 213 is actuated, the emissions from the battery cell 20 are kept away from the bus component 12, preventing the emissions from causing a short circuit between bus components 12, thereby preventing the battery 10 from short circuiting and improving the safety of the battery 10.

Optionally, in the embodiments of the present application, the third wall 21c is different from the second wall 21b. For example, as shown in Figs. 2 and 3, the first wall 21a, the second wall 21b and the third wall 21c may be any three different walls of the battery cell 20.

Since the electrode terminal 214 and the bus component 12 are arranged on one side of the third wall 21c, when the thermal management component 13 is arranged on the same side, there is a need to arrange the thermal management component in a region avoiding the bus component 12. Therefore, in order to arrange the thermal management component 13 more conveniently, the thermal management component 13 may be attached to a wall different from the third wall 21c, so that there is no need to avoid the bus component 12, which is more convenient for mounting, and the contact area between the thermal management component 13 and the battery cell 20 is also larger, which is more conducive to temperature regulation.

It should be noted that the contact area between the thermal management component 13 and the second wall 21b of the battery cell 20 in the embodiments of the present application may be set according to actual applications. The contact area refers to the area of the region of the thermal management component 13 that exchanges heat with the second wall 21b of the battery cell 20. By contact here may refer to the direct contact between the thermal management component 13 and the second wall 21b, or may refer to the indirect contact between the thermal management component 13 and the second wall 21b by means of a thermally conductive adhesive, a thermally conductive pad, etc.

Optionally, in the embodiments of the present application, the first wall 21a and the third wall 21c of the battery cell 20 are arranged opposite to each other, and the second wall 21b is connected to the first wall 21a and the third wall 21c; or the first wall 21a is arranged opposite to the second wall 21b, and the third wall 21c is connected to the first wall 21a and the second wall 21b.

In the embodiments of the present application, the first wall 21a and the third wall 21c of the battery cell 20 are arranged opposite to each other such that the pressure relief mechanism 213 faces away from the bus component 12, so that when the pressure relief mechanism 213 is actuated, the emissions from the battery cell 20 can be discharged away from the bus component 12, reducing the influence of the emissions on the bus component 12 and preventing the battery 10 from short circuiting. Moreover, with the arrangement of the second wall 21b connected to the first wall 21a and the third wall 21c, the three walls can be different, and then the thermal management component 13 is on a different side from the pressure relief mechanism 213 and the bus component 12, so that it is possible to prevent the pressure relief mechanism 213 and/or the bus component 12 in an abnormal state from adversely affecting the thermal management component 13.

Alternatively, the first wall 21a and the second wall 21b of the battery cell 20 are arranged opposite to each other such that the pressure relief mechanism 213 faces away from the thermal management component 13, so that when the pressure relief mechanism 213 is actuated, the emissions from the battery cell 20 can be away from the thermal management component 13, avoiding damage to the thermal management component 13 to further enhance the safety of the battery 10. In addition, with the arrangement of the third wall 21c connected to the first wall 21a and the second wall 21b, the three walls can be different, and then the bus component 12 is on a different side from the pressure relief mechanism 213 and the thermal management component 13, so that it is possible to prevent the pressure relief mechanism 213 and/or the thermal management component 13 in an abnormal state from adversely affecting the bus component 12.

Optionally, in the embodiments of the present application, the area of the second wall 21b is greater than or equal to that of the first wall 21a; and/or the area of the second wall 21b is greater than or equal to that of the third wall 21c. The area of the second wall 21b is set to be not less than the first wall 21a and/or the third wall 21c, so that it is possible to ensure that the second wall 21b will not be too small, and thus ensure that the contact area between the second wall 21b and the thermal management component 13 will not be too small due to the limitation of the area of the second wall 21b. Therefore, the temperature regulation effect of the battery cell 20 can be ensured.

For example, the first wall 21a may be a wall with the smallest area of the battery cell 20, then the second wall 21b may be a wall with a larger or largest area, and the contact area between the thermal management component 13 and the battery cell 20 is also larger, so that the temperature regulation effect on the battery cell 20 can be improved. Alternatively, the third wall 21c may be a wall with the smallest area, then the second wall 21b may be a wall with a larger or largest area, and the contact area between the thermal management component 13 and the battery cell 20 is also larger, so that the temperature regulation effect on the battery cell 20 can be improved. For another example, the first wall 21a may be a wall with the smallest area, the third wall 21c may be a wall with a medium area, and the second wall 21b may be a wall with a medium area or a wall with a larger area. The contact area between the thermal management component 13 and the battery cell 20 is further increased, so that the temperature regulation effect of the battery cell 20 can be significantly increased, but the embodiments of the present application are not limited thereto.

Optionally, in the embodiments of the present application, the second wall 21b is a wall with the largest area of the battery cell 20.

For example, where the battery cell 20 has at least one wall with the largest area, the second wall 21b may be any one of the at least one wall with the largest area. The larger the contact area between the thermal management component 13 and the battery cell 20, the better the temperature regulation effect on the battery cell 20. In this way, attaching the thermal management component 13 to the wall with the largest area of the battery cell 20 can achieve the highest temperature regulation efficiency for the battery cell 20 in the most convenient manner.

By way of example, Fig. 4 shows an exploded schematic structural diagram of a battery cell according to an embodiment of the present application. As shown in Fig. 4, the battery cell 20 includes a shell 21. The shell 21 may include a plurality of walls. The second wall 21b may be any wall of the shell 21 other than the first wall 21a. For example, the battery cell 20 shown in Fig. 4 is an exploded schematic view of any battery cell 20 in the battery 10 shown in Figs. 2 and 3. In this case, as shown in Figs. 2 to 4, the second wall 21b may be a wall with a smaller area of the shell 21. Alternatively, different from the position of the second wall 21b shown in Fig. 4, the second wall 21b in the embodiments of the present application may be a wall with the largest area of the shell 21. Moreover, the shell 21 may include at least two walls with the same area. For example, if the shell 21 of the battery cell 20 is a cuboid, the shell 21 includes two oppositely arranged walls with the same and largest area, and the second wall 21b can be any one of the two.

The shell 21 includes a housing 211 and a cover plate 212. A wall of the housing 211 and the cover plate 212 are each referred to as a wall of the battery cell 20. The housing 211 may be shaped according to the shape of one or more inside electrode assemblies 22 after combination. For example, the housing 211 may be a hollow cuboid or cube or cylinder, and at least one surface of the housing 211 has an opening such that the one or more electrode assemblies 22 can be placed in the housing 211. For example, when the housing 211 is a hollow cuboid or cube, at least one flat surface of the housing 211 is an opening surface, i.e., the flat surface does not have a wall, so that the inside and outside of the housing 211 are in communication with each other. When the housing 211 is a hollow cylinder, each of two end surfaces of the housing 211 is an opening surface, i.e., the end surface does not have a wall, so that the inside and outside of the housing 211 are in communication with each other. At least one opening of the housing 211 can be covered by providing at least one cover plate 212, and each cover plate 212 is connected to the housing 211 to form a closed cavity in which the electrode assembly 22 is placed. The housing 211 is filled with an electrolyte, such as an electrolyte solution.

The first wall 21a of the battery cell 20 in the embodiments of the present application is provided with a pressure relief mechanism 213. The pressure relief mechanism 213 is configured, when an internal pressure or temperature of the battery cell 20 reaches a threshold, to be actuated to release the internal pressure or heat. Optionally, the first wall 21a may be any wall of the battery cell 20. For example, the first wall 21a may be the wall of the battery cell 20 that has the largest area. In this way, since the area of the second wall 21b is greater than or equal to that of the first wall 21a, the first wall 21a and the second wall 21b may have the same area and are both the walls with the largest area of the battery cell 20. For another example, the first wall 21a may be the wall with the smallest area of the battery cell 20. For example, the first wall 21a may be the bottom wall of the housing 211 to facilitate mounting. For ease of illustration, the first wall 21a is separated from the housing 211 in Fig. 4, but this does not limit whether the bottom side of the housing 211 has an opening or not, that is, the bottom wall and the side wall of the housing 211 may be of an integral structure, or may be two parts which are independent of each other but are connected together.

Specifically, as shown in Fig. 4, the pressure relief mechanism 213 may be a part of the first wall 21a or is split from the first wall 21a and fixed to the first wall 21a by means of welding, for example. When the pressure relief mechanism 213 is a part of the first wall 21a, that is, the pressure relief mechanism 213 may be integrally formed with the first wall 21a, the pressure relief mechanism 213 may be formed by providing an indentation or a recess on the first wall 21a. The indentation makes the thickness of the region of the first wall 21a where the pressure relief mechanism 213 is located is less than the thickness of other regions of the first wall 21a other than the pressure relief mechanism 213. It can be understood that, since the wall thickness at the indentation is smaller than the wall thickness of the part of the first wall 21a other than the indentation, when a large amount of gas is generated inside the battery cell 20, the internal pressure rises to a predetermined threshold or the heat inside the battery cell 20 rises to a predetermined threshold, the wall is fractured at the indentation and the adjacent parts, releasing the pressure and heat from the battery cell 20.

Optionally, the pressure relief mechanism 213 in the embodiments of the present application may have various possible pressure relief structures, which will not be limited in the embodiments of the present application. For example, the pressure relief mechanism 213 may be a temperature-sensitive pressure relief mechanism configured to be capable of being melted when the internal temperature of the battery cell 20 provided with the pressure relief mechanism 213 reaches a threshold; and/or the pressure relief mechanism 213 may be a pressure-sensitive pressure relief mechanism configured to be capable of being fractured when an internal gas pressure of the battery cell 20 provided with the pressure relief mechanism 213 reaches a threshold.

In Fig. 4, an example is taken in which the battery cell 20 includes two electrode terminals 214, and the two electrode terminals 214 are arranged on a flat plate-shaped cover plate 212. That is, the cover plate 212 is the third wall 21c of the battery cell 20. The at least two electrode terminals 214 may include at least one positive electrode terminal 214a and at least one negative electrode terminal 214b.

The electrode terminals 214 in the embodiments of the present application are configured to be electrically connected to the electrode assembly 22 to output electric energy. For example, each electrode terminal 214 may be correspondingly provided with a current collecting member 23, which is located between the cover plate 212 and the electrode assembly 22 and configured to electrically connect the electrode assembly 22 to the electrode terminal 214.

As shown in Fig. 4, each electrode assembly 22 has a first tab 221a and a second tab 222a. The first tab 221a and the second tab 222a have opposite polarities. For example, when the first tab 221a is a positive tab, the second tab 222a is a negative tab. The first tab 221a of one or more electrode assemblies 22 is connected to one electrode terminal via one current collecting member 23, and the second tab 222a of one or more electrode assemblies 22 is connected to the other electrode terminal via the other current collecting member 23. For example, the positive electrode terminal 214a is connected to the positive tab via one current collecting member 23, and the negative electrode terminal 214b is connected to the negative tab via the other current collecting member 23.

In this battery cell 20, according to actual use requirements, there may be a single electrode assembly or a plurality of electrode assemblies 22. As shown in Fig. 4, there are four electrode assemblies 22 in the battery cell 20, but the embodiments of the present application are not limited thereto.

Optionally, as shown in Fig. 4, the battery cell 20 may further include a backing plate 24. The backing plate 24 is located between the electrode assembly 22 and the bottom wall of the housing 211, which can provide support to the electrode assembly 22, and can also effectively prevent the electrode assembly 22 from interfering with rounded corners around the bottom wall of the housing 211. In addition, the backing plate 24 may be provided with one or more through holes, e.g., the backing plate may be provided with a plurality of uniformly arranged through holes, or when the pressure relief mechanism 213 is provided on the bottom wall of the housing 211, through holes are formed at positions corresponding to the pressure relief mechanism 213 for facilitating the guiding of liquid and gas. Specifically, this can communicate spaces of an upper surface and a lower surface of the backing plate 24, and gas generated inside the battery cell 20 and the electrolyte solution can freely pass through the backing plate 24.

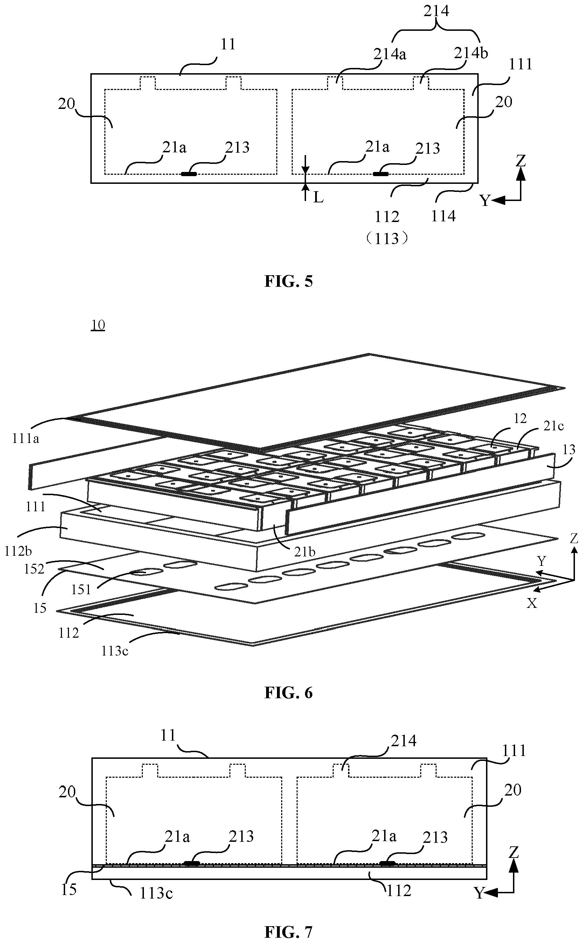

Fig. 5 is a partial schematic cross-sectional view of a battery 10 according to an embodiment of the present application. For example, the partial cross-sectional view shown in Fig. 5 may be a partial cross-sectional view of the battery 10 shown in Fig. 2 in a direction perpendicular to a first direction X. The first direction X may be an arrangement direction of the plurality of battery cells 20 in the battery 10. The battery 10 shown in Fig. 5 further includes a box 11. The box 11 includes an electrical cavity 111 and a collection cavity 112. The electrical cavity 111 is configured to accommodate the battery cell 20 and the thermal management component 13, and the collection cavity 112 is configured to collect emissions from the battery cell 20 when the pressure relief mechanism 213 is actuated.

It should be understood that the electrical cavity 111 in the embodiments of the present application may be configured to accommodate the battery cell 20 and the thermal management component 13, and there is no limitation to the number of battery cells 20 and the number of thermal management components 13 accommodated. In addition, a structure for fixing the battery cell 20 and/or the thermal management component 13 may also be provided in the electrical cavity 111.

Optionally, the electrical cavity 111 may be shaped depend on the battery cell 20 and/or thermal management component 13 accommodated therein. For example, as shown in Figs. 2 to 5, the electrical cavity 111 may be a hollow cuboid enclosed by at least six walls, so as to facilitate manufacturing.

It should be understood that the collection cavity 112 in the embodiments of the present application is configured to collect the emissions from the battery cell 20. Specifically, the collection cavity 112 may contain air or other gases. Alternatively, the collection cavity 112 may also contain liquid, such as a cooling medium, or a component for accommodating the liquid is provided to further cool the emissions entering the collection cavity 112. Further, optionally, the gas or liquid in the collection cavity 112 may flow in a circulating manner.

It should be understood that the electrical cavity 111 in the embodiments of the present application may be sealed or unsealed; similarly, the collection cavity 112 in the embodiments of the present application may also be sealed or unsealed, which will not be limited in the embodiments of the present application.

Therefore, in the battery 10 of the embodiments of the present application, when the battery cell 20 is subjected to thermal runaway, the emissions from the battery cell 20 can be collected by the collection cavity 112, so as to prevent the emissions from the battery cell 20 from being directly released to the outside of the box 11, thereby preventing other components from being damaged by the explosive force generated when the pressure relief mechanism 213 is actuated, and thus improving the safety of the battery 10.

It should be understood that the collection cavity 112 in the embodiments of the present application may be implemented in various ways.

Optionally, in the embodiments of the present application, as shown in Figs 2 to 5, the box 11 further includes a first box wall 114 arranged opposite and spaced apart from the first wall 21a, there is a gap 113 between the first wall 21a and the first box wall 114, and the gap 113 is configured to form at least part of the collection cavity 112. For example, the first wall 21a may be at least partially out of contact with the first box wall 114 to form the gap 113.

In the embodiments of the present application, the gap 113 between the first wall 21a and the first box wall 114 forms at least part of the collection cavity 112, so that it is possible that the emissions from the battery cell 20 are collected by using the collection cavity 112 without adding additional components, thus the structure of the battery 10 is simplified, the volume utilization rate of the battery 10 is improved, the collection efficiency of the emissions from the battery cell 20 is improved, and the safety of the battery 10 is improved.

In some implementations of the present application, as shown in Figs. 2 to 5, the minimum distance L between the first wall 21a and the first box wall 114 is greater than or equal to 7 mm.

The minimum distance L between the first wall 21a and the first box wall 114 may be the minimum distance L among the distances from different points on the first wall 21a to the first box wall 114. For example, when the pressure relief mechanism 213 is directly provided on the first wall 21a of the battery cell 20 in the form of an indentation, the minimum distance L between the first wall 21a and the first box wall 114 is the distance from any point in the non-indented region of the first wall 21a to the first box wall 114, which is greater than or equal to 7 mm.

It should be noted that where there is a contact area between the first wall 21a and the first box wall 114, for example, where the first wall 21a and the first box wall 114 are in contact with each other by means of a connecting member, the minimum distance L between the first wall 21a and the first box wall 114 is the minimum distance L among the distances from any point in the region of the first wall 21a that is not in contact with the first box wall 114 to the first box wall 114.

In the embodiments of the present application, the minimum distance L between the first wall 21a and the first box wall 114 is defined to be greater than or equal to 7 mm, so that a sufficient deformation space can be reserved for the pressure relief mechanism 213, so that the emissions can be released from the battery cell 20 in a timely manner to reduce the internal pressure or temperature of the battery cell 20, and a sufficient release space can also be reserved for the emissions released from the battery cell 20 when the pressure relief mechanism 213 is actuated, so as to prevent the battery cell 20 from contacting with adjacent battery cells 20 due to excessive accumulation of the emissions from the battery cell, which would affect the adjacent battery cells 20, thereby improving the safety of the battery 10.

In some implementations of the present application, the minimum distance L between the first wall 21a and the first box wall 114 is between 7 mm and 25 mm. For example, the minimum distance L between the first wall 21a and the first box wall 114 is 7 mm, 8 mm, 9 mm, 10 m, 11 mm, 12 mm, 13 mm, 14 mm, 15 mm, 16 mm, 17 mm, 18 mm, 19 mm, 20 mm, 21 mm, 22 mm, 23 mm, 24 mm and 25 mm.

It can be understood that the larger the minimum distance L between the first wall 21a and the first box wall 114 is, the more conducive it is for the emissions to be released from the battery cell 20 when the pressure relief mechanism 213 is actuated. However, the larger the minimum distance L between the first wall 21a and the first box wall 114 is, the larger the volume of the collection cavity 112 is, the lower the volume utilization rate of the battery 10 is, and the lower the energy density of the battery 10 is.

In the embodiments of the present application, by defining the minimum distance L between the first wall 21a and the first box wall 114 between 7 mm and 25 mm, not only can the influence of external force on the battery cell 20 be reduced, but the volume utilization rate of the battery 10 and the energy density of the battery 10 can also be increased while reserving a sufficient space for the actuation of the pressure relief mechanism 213 and the emissions released from the battery cell 20.

Fig. 6 shows a battery 10 according to a further embodiment of the present application. Fig. 7 is a partial schematic cross-sectional view of a battery 10 according to the further embodiment of the present application. For example, Fig. 7 may be a partial schematic cross-sectional view of the battery 10 shown in Fig. 6 in a direction perpendicular to a first direction X. The first direction X is the same as the first direction X in the above embodiments.

As shown in Figs. 6 and 7, the battery 10 further includes an isolation component 15. The isolation component 15 is attached to the first wall 21a. The isolation component 15 is configured to isolate the electrical cavity 111 from the collection cavity 112.

It should be understood that the so-called "isolation" here refers to separation, which may not be sealed. Specifically, the electrical cavity 111 and the collection cavity 112 are isolated from each other by the isolation component 15, that is, the electrical cavity 111 for accommodating the battery cell 20 and the thermal management component 13 is spatially separated from the collection cavity 112 for collecting the emissions, so that it is possible to prevent at least part of the emissions from entering the electrical cavity 111 from the collection cavity 112, avoiding thermal diffusion.

In the embodiments of the present application, the isolation component 15 includes a wall shared by the electrical cavity 111 and the collection cavity 112. As shown in Figs. 6 and 7, the isolation component 15 (or a part thereof) may be directly used as the wall shared by the electrical cavity 111 and the collection cavity 112, so that the distance between the electrical cavity 111 and the collection cavity 112 can be reduced as much as possible, thus saving space, and increasing the volume utilization rate of the box 11.

It should be understood that in the embodiments of the present application, the electrical cavity 111 and the collection cavity 112 may be implemented in the box 11 by means of the isolation component 15 in various ways, which will not be limited in the embodiments of the present application. For example, taking Figs. 6 and 7 as an example, for the electrical cavity 111, the box 11 may include a first enclosure body with an opening, and the isolation component 15 covers the opening of the first enclosure body to form the electrical cavity 111. In this way, the wall for forming the electrical cavity 111 includes the first enclosure body and the isolation component 15. The first enclosure body may also be implemented in various ways. For example, the first enclosure body may be of a hollow integral structure with an opening at one end; or the first enclosure body may include a first part 111a and a second part 112b with openings on two opposite sides respectively, the first part 111a covers the opening on one side of the second part 112b, so as to form a first enclosure body with an opening at one end, and the isolation component 15 covers the opening on the other side of the second part 112b to form the electrical cavity 111. As shown in Figs. 6 and 7, the box 11 further includes a protective member 113c. The protective member 113c is configured to form the collection cavity 112 with the isolation component 15. In addition, the protective member 113c may also be configured to protect the isolation component 15, that is, the wall of the collection cavity 112 includes the protective member 113c and the isolation component 15.

For another example, unlike the aforementioned manner shown in Figs. 6 and 7, the box 11 may further include a closed second enclosure body, which may be configured to form an electrical cavity 111, or by providing the isolation component 15 inside the second enclosure body, the electrical cavity 111 is isolated inside the second enclosure body. Further, a collection cavity 112 may also be isolated. The second enclosure body may also be implemented in various ways. For example, the second enclosure body may include a third part and a fourth part, one side of the fourth part has an opening to form a semi-closed structure, the isolation component 15 is provided inside the fourth part, and the third part covers the opening of the fourth part to form the closed second enclosure body.

In the embodiments of the present application, the isolation component 15 is provided with a pressure relief region 151. The pressure relief region 151 is configured to discharge the emissions to the collection cavity 112 through the pressure relief region 151 when the pressure relief mechanism 213 is actuated, thereby preventing the emissions from damaging other battery cells 20 in the electrical cavity 111, avoiding thermal diffusion and thus improving the safety of the battery 10. Optionally, the isolation component 15 further includes a non-pressure relief region 152, and the non-pressure relief region 152 is a region of the isolation component 15 other than the pressure relief region 151. For example, a binder (not shown) may be coated on the non-pressure relief region 152 to fix the battery cell 20 to the isolation component 15, that is, to bond and fix the first wall 21a of the battery cell 20 to the isolation component 15.

It should be understood that the pressure relief region 151 of the isolation component 15 in the embodiments of the present application may be implemented in various ways. For example, the pressure relief region 151 in the isolation component 15 may not be treated in any special way. The embodiments of the present application only refers to a partial region of the isolation component 15 opposite to the pressure relief mechanism 213, which is called the pressure relief region 151.

For another example, the pressure relief region 151 in the isolation component 15 may also be specially treated such that the pressure relief region can be more easily damaged when the pressure relief mechanism 213 is actuated.

As an example, the pressure relief region 151 is a weakened region configured to be capable of being damaged when the pressure relief mechanism 213 is actuated, such that the emissions pass through the weakened region and enter the collection cavity 112. Configuring the pressure relief region 151 as a weakened region can make the isolation component 15 in a relatively sealed state when the pressure relief mechanism 213 is not actuated, for example, during normal use of the battery 10, thus effectively protecting the pressure relief mechanism 213 from being damaged and failed due to external force. In addition, when the pressure relief mechanism 213 is actuated, the strength of the weakened region is less than that of other regions in the isolation component 15 other than the pressure relief region 151, and the weakened region is thus easily damaged, so that the emissions from the battery cell 20 provided with the pressure relief mechanism 213 are discharged out of the electrical cavity 111 through the weakened region, for example, may pass through the weakened region into the collection cavity 112.

As another embodiment, the pressure relief region 151 may alternatively be a through hole configured such that when the pressure relief mechanism 213 is actuated, the emissions can enter the collection cavity 112 through the through hole. When the pressure relief region 151 is the through hole, the manufacturing is facilitated, and the emissions discharged through the pressure relief mechanism 213 can be also released more quickly.

Several possible implementations of the electrical cavity 111 and the collection cavity 112 in the embodiments of the present application are described above with reference to the accompanying drawings. For the convenience of description, the following description mainly takes the case where no isolation component 15 is provided as an example, but the embodiments of the present application are not limited thereto.

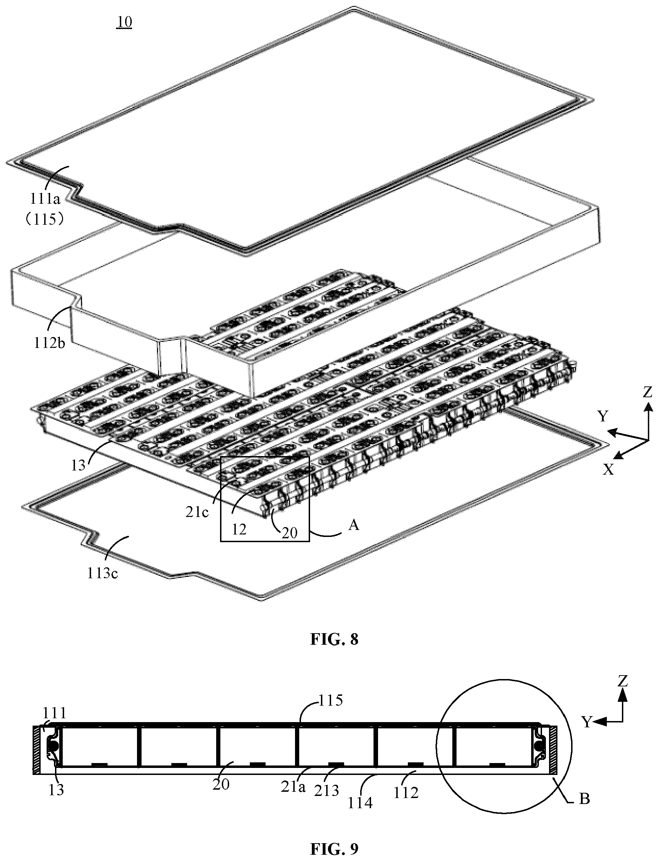

Fig. 8 shows a partial exploded schematic diagram of a battery 10 according to a still further embodiment of the present application. Fig. 9 is a partial schematic cross-sectional view of a battery 10 according to the still further embodiment of the present application. For example, Fig. 9 may be a partial schematic cross-sectional view of the battery 10 shown in Fig. 8 in a direction perpendicular to a first direction X. The first direction X is the same as the first direction X in the above embodiments.

As shown in Figs. 8 and 9, the box 11 further includes a second box wall 115. The second box wall 115 is configured to be fixed to the third wall 21c such that the battery cell 20 is fixed to the box 11.

In the embodiments of the present application, the fixing of the battery cell 20 can be realized by the fixing the second box wall 115 to the third wall 21c, so that not only can the shaking of the battery cell 20 in the box due to the influence of the external environment be avoided, improving the stability and safety of the battery 10, but a gap between the first wall 21a of the battery cell 20 and the wall of the box 11 can also be formed without adding other parts and components. This gap may be configured to form at least part of the collection cavity to collect the emissions from the battery cell 20, increasing the volume utilization rate of the battery 10 and the energy density of the battery 10.

The second box wall 115 and the third wall 21c may be directly fixed to each other, or may be indirectly fixed to each other via a fixing component. The fixing component includes but is not limited to a bolt, a snap groove, etc.

The case where the second box wall 115 and the third wall 21c are directly fixed to each other is taken as an example for illustration. For example, there is a magnetic material on the side of the second box wall 115 close to the third wall 21c, and there is also a magnetic material on the side of the third wall 21c close to the second box wall 115. The second box wall 115 is fixed to the third wall 21c through the magnetic force between the magnetic materials, so as to fix the battery cell 20 to the box 11.

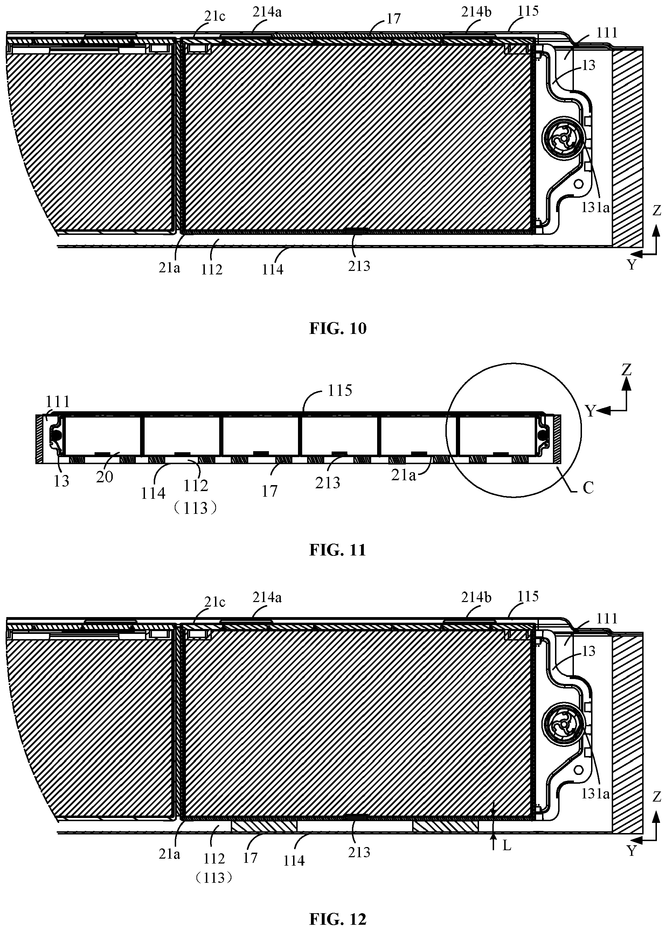

Optionally, the second box wall 115 and the third wall 21c may also be fixed to each other in other ways. Fig. 10 is a partial enlarged view of a region B in Fig. 9. Optionally, in the embodiments of the present application, the third wall 21c is fixed to the second box wall 115 via a binder 17, so as to facilitate manufacturing.

For example, the binder 17 may be coated on a region of the third wall 21c where the electrode terminal 214 is not provided, so as to fix the third wall 21c to the second box wall 115. Illustratively, the binder 17 may take the form of a thermally conductive silicone, an epoxy resin adhesive, a polyurethane adhesive, etc.

Optionally, in the embodiments of the present application, similar to the third wall 21c and the second box wall 115, the fixing between the battery cell 20 and the box 11 may also be realized by means of other walls. For example, the fixing between the battery cell 20 and the box 11 can be realized by means of the first wall 21a of the battery cell 20 and the first box wall 114 of the box 11. For example, the first wall 21a and the first box wall 114 may be connected to each other via a connecting member (e.g., a binder).

In the embodiments of the present application, since the binder 17 has the advantages of low cost and easy availability, fixing the third wall 21c to the second box wall 115 via the binder 17 reduces the fixing difficulty and reduces the production cost of the battery 10. Moreover, in the actual production process of the battery 10, the binder 17 may be coated on a partial region of the third wall 21c, and the binder 17 may also be coated on a partial region of the second box wall 115, increasing the flexibility of fixing between the third wall 21c and the second box wall 115.

Fig. 11 shows another partial schematic cross-sectional view of the battery 10 according to the still further embodiment of the present application. For example, Fig. 11 may be a partial schematic cross-sectional view of the battery 10 shown in Fig. 8 in a direction perpendicular to a first direction X. Fig. 12 is a partial enlarged view of a region C in Fig. 11. As shown in Figs. 11 and 12, a corresponding thickness of binder 17 may be coated on a partial region of the first wall 21a other than the pressure relief mechanism 213, and the first wall 21a of the battery cell 20 is fixed to the first box wall 114 via the binder 17 to realize the fixing between the battery cell 20 and the box 11.

Moreover, there may be a gap 113 between the region of the first wall 21a that is not coated with the binder 17 and the first box wall 114, and the gap 113 forms at least part of the collection cavity 112, so that when the pressure relief mechanism 213 is actuated, the binder 17 will not affect the actuation of the pressure relief mechanism 213, and the emissions from the battery cells 20 can thus be directly discharged to the collection cavity 112 through the pressure relief mechanism 213. The thickness of the binder 17 is related to the size of the gap 113, the thicker the binder 17 is, the larger the gap 113 is, and the more the emissions can be accommodated in the collection cavity 112. In this way, the capacity of the collection cavity 112 can be adjusted according to the thickness of the binder 17, making the configuration of the collection cavity 112 more flexible.

Optionally, in the embodiments of the present application, as shown in Figs. 8 to 12, the battery 10 includes a plurality of rows of battery cells 20 arranged in the first direction X, and each row of battery cells 20 of the plurality of rows of battery cells 20 includes at least one battery cell 20 arranged in a second direction Y The first direction X is perpendicular to the second direction Y and the second wall 21b.

For example, taking Figs. 8 to 12 as an example, the battery 10 has 18 rows of battery cells 20 arranged in the first direction X, and each row of battery cells 20 includes 6 battery cells 20.

It can be understood that the number of battery cells 20 is set according to actual requirements. The greater the number of battery cells 20 is, the greater the output power of the battery 10 is; and the smaller the number of battery cells 20 is, the smaller the output power of the battery is. Therefore, it is possible that a plurality of rows of battery cells 20 are arranged in the first direction X, and each row of battery cells 20 is provided with at least one battery cell 20 in the second direction Y. Moreover, the plurality of battery cells 20 in the battery 10 are arranged in an array, so that the assembly of the battery 10 is facilitated, and the volume utilization rate of the plurality of battery cells 20 in the battery can also be increased. Since the first direction X is perpendicular to the second wall 21b, when the thermal management component 13 is attached to the second wall 21b, the first direction X is also perpendicular to the thermal management component 13.

It should be understood that the first direction X and the second direction Y in the embodiments of the present application are perpendicular to each other. For example, as shown in Figs. 8 to 12, in the embodiment of the present application, the first direction X defined as the width direction of the battery cell 20 is taken as an example, the second direction Y is defined as the length direction of the battery cell 20. The width direction and the length direction of the battery cell 20 are both perpendicular to the height direction of the battery cell 20, and the length of an edge of the battery cell 20 in the width direction is smaller than that of an edge in the length direction.

Optionally, the thermal management component 13 is attached to the second wall 21b of the at least one battery cell 20 of at least one row of battery cells 20 of the plurality of rows of battery cells 20. For the plurality of rows of battery cells 20, the at least one battery cell 20 of at least one row of battery cells 20 is correspondingly provided with a thermal management component 13. The thermal management component 13 may regulate the temperature of the at least one battery cell 20 attached thereto. In this way, inside the battery 10, there is at least one thermal management component 13 which may be configured to regulate the temperature of at least one battery cell 20.

In the embodiments of the present application, by attaching the thermal management component 13 to the second wall 21b of the at least one battery cell 20 of at least one row of battery cells 20 of the plurality of rows of battery cells 20, the production cost of producing the battery 10 can be reduced.

In the embodiments of the present application, the battery cells 20 include two second walls 21b oppositely arranged in the first direction X, and on two sides of at least one row of battery cells 20 of the plurality of rows of battery cells 20 in the first direction X, provided are the thermal management components 13 attached to the two second walls 21b of the at least one battery cell 20 respectively. Among the plurality of rows of battery cells 20, there is at least one row of battery cells 20 satisfying that for any battery cell 20 of the at least one row of battery cells 20, the battery cell 20 includes two second walls 21b oppositely arranged in the first direction X, and the two second walls 21b are each correspondingly provided with a thermal management component 13, that is, the row of battery cells 20 is clamped between the two thermal management components 13. Therefore, the two thermal management components 13 can simultaneously regulate the temperature of this row of battery cells 20, so that it is possible to improve the temperature regulation efficiency and improve the safety of the battery 10. For example, if each row of battery cells 20 of the plurality of rows of battery cells 20 in the battery 10 is provided with two thermal management components 13, the temperature regulation efficiency can be greatly improved. For example, when a battery cell 20 is subjected to thermal runaway, it can be cooled more effectively, thereby avoiding thermal diffusion and improving the safety of the battery 10.

In the embodiments of the present application, among the plurality of rows of battery cells 20, at least two adjacent rows of battery cells 20 are provided therebetween with the same thermal management component 13. In this way, among the plurality of battery cells 20, there are two adjacent rows of battery cells 20 satisfying that the two rows of battery cells 20 are provided therebetween with the same thermal management component 13, so as to facilitate the manufacture and assembly of the battery 10. For example, in the first direction X, there may be some of the battery cells 20 satisfying that two adjacent rows of battery cells 20 are provided therebetween with the same thermal management component 13; and there are also some of the battery cells 20 satisfying that two adjacent rows of battery cells 20 are provided therebetween with no thermal management component 13, improving the space utilization rate in the battery 10. For another example, it is also possible that among the plurality of rows of battery cells 20, every two adjacent rows of battery cells 20 are provided therebetween with a thermal management component 13, so that each battery cell 20 corresponds to at least two thermal management components 13, thereby improving the temperature regulation effect.

It should be understood that the number of thermal management components 13 in the battery 10 of the embodiment of the present application may be set according to actual applications. For example, the number of thermal management components 13 in the battery 10 may be selected based on the size and number of battery cells 20.

For example, the battery includes a plurality of thermal management components 13 arranged in the first direction X, so as to improve the temperature regulation efficiency.

For another example, the plurality of thermal management components 12 are arranged at intervals in the first direction X, so that at least one battery cell 20 is arranged between two adjacent thermal management components 12, so that the volume utilization rate of the battery 10 can be increased, and the temperature regulation efficiency can also be improved.

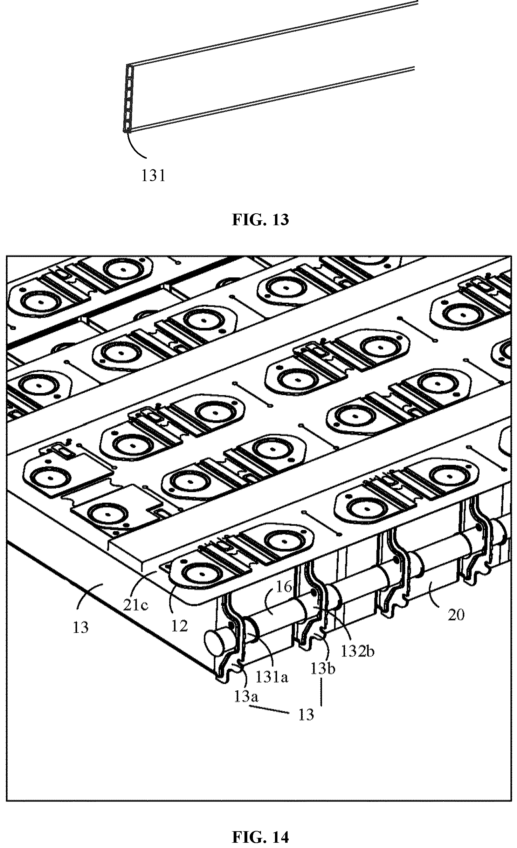

Fig. 13 is a partial enlarged view of any one of the thermal management components 13 shown in Fig. 8. As shown in Figs. 8 to 13, the thermal management components 13 are each provided with a heat exchange channel 131 for accommodating a heat exchange medium, and the heat exchange channels 131 of the plurality of thermal management components 13 are in communication with each other.

The heat exchange medium may be liquid, gas or solid. For example, in the case of cooling or lowering the temperature of the battery cells 20, the thermal management component 13 is configured to accommodate a cooling fluid to lower the temperature of the plurality of battery cells 20. In this case, the thermal management component 13 may also be called a cooling component, a cooling system or a cooling plate, etc. The fluid accommodated by the thermal management component may also be called a cooling medium or a cooling fluid, and more specifically, may be called a cooling liquid or a cooling gas, wherein the cooling medium may be designed to flow in a circulating manner to achieve better temperature adjustment effects. The cooling medium may specifically use water, a mixture of water and ethylene glycol, or air, etc.

The heat exchange channels 131 of the plurality of thermal management components 13 may be in communication with each other. In this way, the plurality of thermal management components 13 are in communication with each other, so that management and control are facilitated, and the integration and safety of the battery 10 are improved; moreover, when the temperature of some thermal management components 13 in the battery 10 changes greatly, heat exchange can be realized by means of the heat exchange channels, so that the temperature difference between the plurality of thermal management components 13 is small, and the temperature regulation efficiency is improved. Furthermore, each thermal management component 13 may also be provided with a plurality of heat exchange channels. The plurality of heat exchange channels are arranged at intervals in a height direction Z, so as to increase the heat exchange area between the thermal management component 13 and the battery cell 20 and improve the temperature regulation efficiency.

Optionally, the heat exchange channels 131 of the plurality of thermal management components 13 may be communication with each other in various ways. For example, the heat exchange channels 131 of the plurality of thermal management components 13 may be in communication with each other through pipelines.

Fig. 14 shows a partial schematic perspective view of a plurality of battery cells 20 and a plurality of thermal management components 13 according to an embodiment of the present application. For example, the plurality of battery cells 20 and the plurality of thermal management components 13 shown in Fig. 14 may be a partial enlarged schematic diagram of a region A in Fig. 8.

In the embodiments of the present application, as shown in Fig. 14, the plurality of thermal management components 13 include a first thermal management component 13a and second thermal management component 13b adjacent to each other, wherein the first thermal management component 13a includes a first connecting pipe 131a in communication with the heat exchange channel 131, the second thermal management component 13b includes a second connecting pipe 132b in communication with the heat exchange channel 131, and the first connecting pipe 131a and the second connecting pipe 132b are connected to each other, such that the heat exchange channel 131 of the first thermal management component 13a and the heat exchange channel 131 of the second thermal management component 13b are in communication with each other.

In the embodiments of the present application, the heat exchange channels 131 of the adjacent first and second thermal management components 13a and 13b are in communication with each other by means of the first connecting pipe 131a and the second connecting pipe 132b, so that the difficulty of connecting the heat exchange channels 131 can be reduced; and arranging the components for connecting the heat exchange channels 131 together with the first thermal management component 13a and the second thermal management component 13b can increase the volume utilization rate of the battery 10, thereby increasing the energy density of the battery 10.

It should be understood that the first connecting pipe 131a and the first thermal management component 13a may be of an integrally formed structure, or may be of a split structure. Illustratively, the first connecting pipe 131a and the first thermal management component 13a are of a split structure, and the first connecting pipe 131a may be connected to the first thermal management component 13a by means of binder bonding, bolt connection or welding. The connection method between the second connecting pipe 132b and the second thermal management component 13b is similar to that between the first connecting pipe 131a and the first thermal management component 13a, and will not be repeated here. Moreover, the connection method between the first connecting pipe 131a and the first thermal management component 13a and the connection method between the second connecting pipe 132b and the second thermal management component 13b may be the same or different. For example, the same connection method may be provided, in order to facilitate manufacturing.

The materials of the first connecting pipe 131a and the second connecting pipe 132b may be set according to actual applications, and the materials of the first connecting pipe 131a and the second connecting pipe 132b may be the same or different. For example, they may be of a material such as natural rubber, styrene-butadiene rubber or cis-butadiene rubber. The use of the ethylene-propylene rubber, fluorine rubber or silicon rubber material also provides the characteristics of acid-alkali resistance and high temperature resistance. The material may alternatively be, for example, a metal material resistant to corrosion and thermal expansion and cold contraction, such as iron, stainless steel and a copper-zinc alloy, or may be a composite material composed of plastic, a hot-melt adhesive and an alloy.

Optionally, the first connecting pipe 131a and the second connecting pipe 132b may be respectively arranged in any region of the first thermal management component 13a and the second thermal management component 13b that is beyond a row of battery cells 20.

For example, in the embodiments of the present application, as shown in Fig. 14, the first connecting pipe 131a is arranged in a region of the first thermal management component 13a that is beyond a row of battery cells 20 in the second direction Y, the second connecting pipe 132b is arranged in a region of the second thermal management component 13b that is beyond the row of battery cells 20 in the second direction Y, the row of battery cells 20 is a row of battery cells 20 located between the first thermal management component 13a and the second thermal management component 13b, and the first connecting pipe 131a and the second connecting pipe 132b extend in the first direction X and are connected to each other.

In the embodiments of the present application, by extending the first connecting pipe 131a and the second connecting pipe 132b in the first direction X to connect same with each other, the transportation path of the heat exchange medium in the heat exchange channel 131 of the first thermal management component 13a and the heat exchange channel 131 of the second heat pipe component 13b can be shortened, so that not only the transportation efficiency of the heat exchange medium in the corresponding heat exchange channels 131 is improved, but the volume utilization rate of the battery 10 is also increased.

Optionally, the first connecting pipe 131a and the second connecting pipe 132b extend in the first direction X to directly or indirectly connect same to each other.

Taking the direct connection between the first connecting pipe 131a and the second connecting pipe 132b as an example for illustration, the first connecting pipe 131a and the second connecting pipe 132b may be connected to each other in various ways. For example, the first connecting pipe 131a is provided with a first recess which is recessed from the inside of the first connecting pipe 131a to the outside of the first connecting pipe 131a, and the second connecting pipe 132b is provided with a first protrusion which protrudes toward the outside of the second connecting pipe 132b. The first recess is configured to accommodate the first protrusion so as to connect the first connecting pipe 131a and the second connecting pipe 132b to each other.

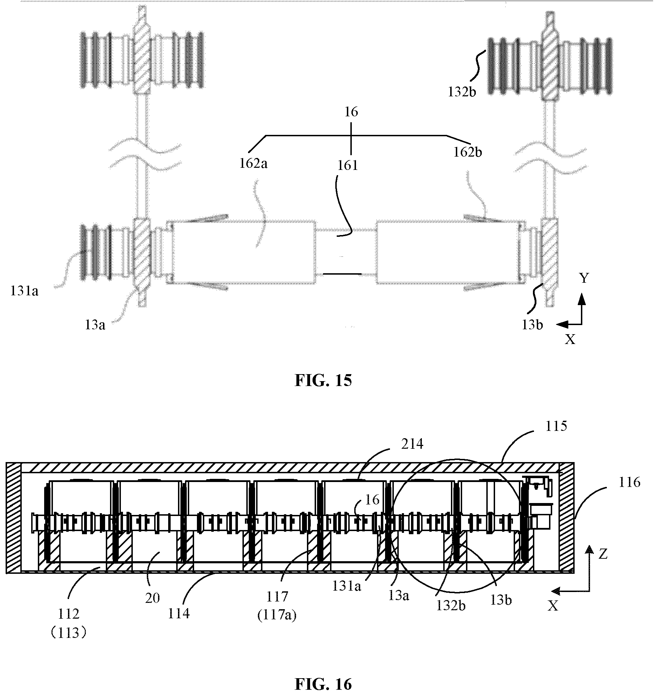

The indirect connection between the first connecting pipe 131a and the second connecting pipe 132b is taken as an example for illustration. Fig. 15 shows a schematic top view of the first thermal management component 13a and the second thermal management component 13b connected to each other according to an embodiment of the present application. As shown in Figs. 14 and 15, the first connecting pipe 131a and the second connecting pipe 132b are in indirect communication with each other through an intermediate connecting pipe 16. The intermediate connecting pipe 16 includes a fixed pipe 161 and a movable pipe 162. The movable pipe 162 is movably and sealingly connected to the fixed pipe 161, the movable pipe 162 and the first connecting pipe 131a or the second connecting pipe 132b to communicate the heat exchange channel 131 of the first thermal management component 13a with the heat exchange channel 131 of the second thermal management component 13b, and the heat exchange medium circulates continuously.

The movable pipe 162 is sealingly connected to the fixed pipe 161 so as to prevent the medium from escaping from a gap of the movable pipe 162. Optionally, the fixed pipe 161 has an outer diameter smaller than the inner diameter of the movable pipe 162, and the first connecting pipe 131a and the second connecting pipe 132b have an outer diameter smaller than the inner diameter of the movable pipe 162, so as to achieve sealed connection between the intermediate connecting pipe 16 and the first connecting pipe 131a and the second connecting pipe 132b. The fixed pipe 161 and the movable pipe 162 may be of the same or different materials. For example, the fixed pipe 161 and the movable pipe 162 may each be composed of a rubber layer and a framework layer. The framework layer may be of a material such as cotton fibers, various synthetic fibers, carbon fibers or asbestos and steel wire, and the rubber layer may be of a material such as natural rubber, styrene-butadiene rubber or cis-butadiene rubber. The fixed pipe 161 and the movable pipe 162 may also be made of a metal material, a composite material and so on, which will not be limited in the present application. The fixed pipe 161 may have high-temperature resistance and small thermal deformation, a smooth inner wall, small resistance to a fluid, high pressure bearing capacity, etc. Optionally, the movable pipe 162 and the fixed pipe 161 may be installed by means of a snap-fit sleeved or threaded connection, etc. Optionally, the intermediate connecting pipe 16 may include a fixed pipe 161 and at least one movable pipe 162. The number of movable pipes 162 maybe determined according to actual conditions. For example, it is determined according to the distance between the first connecting pipe 131a and the second connecting pipe 132b. The greater the distance between the first connecting pipe 131a and the second connecting pipe 132b, the greater the number of movable pipes 162.

In Fig. 15, an example is taken in which the intermediate connecting pipe 16 includes a first movable pipe 162a and a second movable pipe 162b. Specifically, the first movable pipe 162a may move away from the fixed pipe 161 in the first direction X such that the first movable pipe 162a is connected to the first connecting pipe 131a. Similarly, the second movable pipe 162b may move away from the first movable pipe 162a in the first direction X such that the second movable pipe 162b is connected to the second connecting pipe 132b. Alternatively, the first connecting pipe 162a may move toward the fixed pipe 161 in the first direction X such that the first movable pipe 162a is disconnected from the first connecting pipe 131a. Similarly, the second connecting pipe 162b may move toward the fixed pipe 161 in the first direction X such that the second movable pipe 162b is disconnected from the second connecting pipe 132b, so that the first connecting pipe 131a and the second connecting pipe 132b are no longer connected to each other. In this way, the difficulty of assembling the battery 10 can be reduced by connecting and disconnecting the first connecting pipe 131a and the second connecting pipe 132b via the intermediate connecting pipe 16 with a variable length.

It should be noted that, the connection method between the first movable pipe 162a and the first connecting pipe 131a may be the same as or different from that between the second movable pipe 162b and the second connecting pipe 132b. For example, the connection method between the first movable pipe 162a and the first connecting pipe 131a, and the connection method between the second movable pipe 162b and the second connecting pipe 132b are both threaded connections.

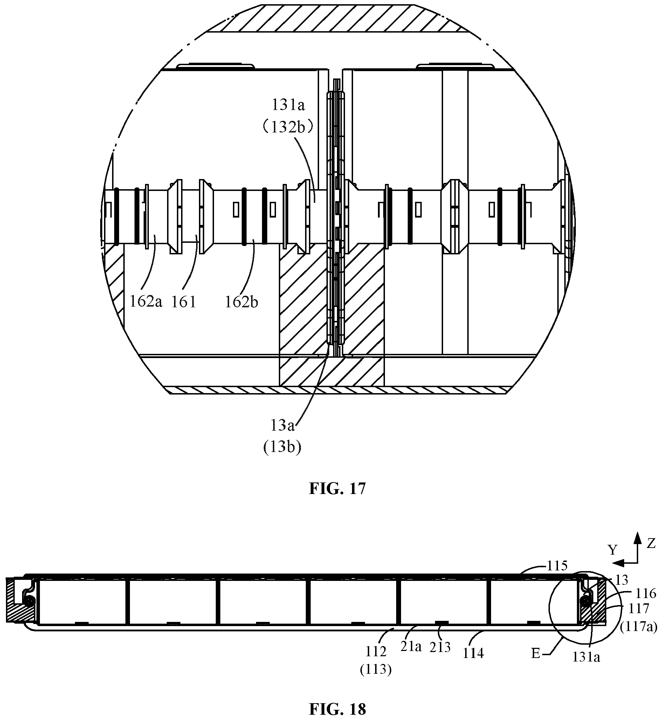

Fig. 16 shows a partial side view of the battery 10 of this embodiment. Fig. 17 is a partial schematic view of a region D of the still further battery disclosed in an embodiment of the present application. Fig. 18 shows another partial cross-sectional view of the battery 10 according to the still further embodiment of the present application. For example, Fig. 18 may be a partial schematic cross-sectional view of the battery 10 shown in Fig. 8 in a direction perpendicular to a first direction X. As shown in Figs. 16 to 18, the box 11 further includes a support component 117. The support component 117 is configured to support the first connecting pipe 131a and/or the second connecting pipe 132b.

In the embodiments of the present application, the first connecting pipe 131a and/or the second connecting pipe 132b are supported by the support component 117, so that a gap can be formed between the row of battery cells 20 located between the first thermal management component 13a and the second thermal management component 13b and a wall of the box 11. For example, a gap 113 is formed between the first wall 21a of the row of battery cells 20 and any wall of the box 11, and this gap may be configured to form at least part of the collection cavity 112, so that the collection cavity 112 collects the emissions from the battery cell 20. In this way, the volume utilization rate of the battery 10 and the energy density of the battery 10 are increased.

It should be understood that the support component 117 may be in contact with at least part of the first connecting pipe 131a to support the first connecting pipe 131a, or the support component 117 may be in contact with at least part of the second connecting pipe 132b to support the second connecting pipe 132b, or the support component 117 may be in contact with both at least part of the first connecting pipe 131a and at least part of the second connecting pipe 132b to support the first connecting pipe 131a and the second connecting pipe 132b.

Illustratively, the support component 117 may be a component arranged inside the box 11, or the support component 117 may be a protrusion structure arranged on a wall of the box 11. For example, the support component 117 may be a protrusion structure on the first box wall 114 opposite the first wall 21a. The protrusion structure protrudes from an inner surface of the first box wall 114 toward the inside of the battery 10; or the protrusion structure may protrude from the inner surface of the first box wall 114 and an inner surface of the third box wall 116 toward the inside of the battery 10; or, as shown in Figs. 17 and 18, the support component 117 may be a protrusion 117a on the third box wall 116. The protrusion 117a protrudes from the third box wall 116 toward the inside of the battery 10. The third box wall 116 is a wall of the box 11 perpendicular to the second direction Y. Moreover, the first connecting pipe 131a and the second connecting pipe 132b are in communication with each other in the first direction X, the side of the protrusion 117a facing the first thermal management component 13a is attached to the first connecting pipe 131a, and the side of the protrusion 117a facing the second thermal management component 13b is attached to the second connecting pipe 132b.

It should be understood that in the embodiments of the present application, the support component 117 defined as the protrusion 117a on the third box wall 116 is mainly taken as an example below for illustration.

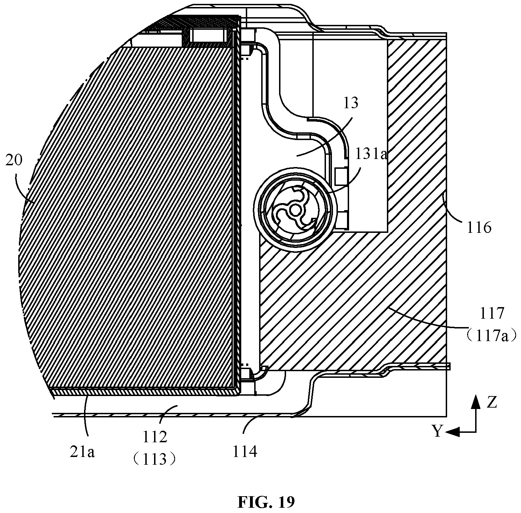

Optionally, in the embodiments of the present application, Fig. 19 is a partial enlarged view of a region E in Fig. 18. As shown in Figs. 16 to 19, one side of the support component 117 in a third direction Z is configured to have the first connecting pipe 131a and/or the second connecting pipe 132b attached thereto. The third direction Z is perpendicular to the first direction X and the second direction Y

It should be understood that the side of the support component 117 (e.g., the protrusion 117a) in the third direction Z may be the side of the support member 117 perpendicular to the third direction Z.

In the embodiments of the present application, by attaching the first connecting pipe 131a and/or the second connecting pipe 132b on one side of the support component 117 in the third direction Z, the space of the battery 10 in the third direction Z can be utilized to increase the volume utilization rate of the battery 10; and when assembling the battery 10, it is possible that where the first connecting pipe 131a and the second connecting pipe 132b have been in communication with each other, the support component 117 is arranged to have the first connecting pipe 131a and/or the second connecting pipe 132b attached thereto, or that the support component 117 is arranged to have the first connecting pipe 131a or the second connecting pipe 132b attached thereto first, and then the first connecting pipe 131a communicates with the second connecting pipe 132b, thereby increasing the flexibility of assembly.

Optionally, a fixing component may be provided on one side of the support component 117 in the third direction Z, such that the support component 117 is attached to the first connecting pipe 131a and/or the second connecting pipe 132b via the fixing component to support the first thermal management component 13a, the second thermal management component 13b and the battery cell 20. The fixing component may be implemented in various ways. For example, the fixing component may be a binder, or may be a limiting structure, which will not be limited in the embodiments of the present application.

Optionally, in the embodiments of the present application, as shown in Fig. 19, one side of the support component 117 in the third direction Z is provided with an accommodating groove 117b. The accommodating groove 117b is configured to accommodate at least part of the first connecting pipe 131a and/or at least part of the second connecting pipe 132b.

It should be understood that the radial dimension of the accommodating groove 117b is greater than or equal to the first connecting pipe 131a and/or the second connecting pipe 132b, so as to accommodate at least part of the first connecting pipe 131a and/or at least part of the second connecting pipe 132b. Optionally, a surface of the accommodating groove 117b may also be coated with the binder 17 to further fix at least part of the first connecting pipe 131a and/or at least part of the second connecting pipe 132b.

In the embodiments of the present application, an accommodating groove 117b is provided on one side of the support component 117 in the third direction Z to accommodate at least part of the first connecting pipe 131a and/or at least part of the second connecting pipe 132b, so that the support component 117 can more stably support and fix the first connecting pipe 131a and/or the second connecting pipe 132b, preventing the first connecting pipe 131a, the second connecting pipe 132b and the row of battery cells 20 between them from shaking in the box 11, thereby increasing the stability and safety of the battery 10.

While the present application has been described with reference to the preferred embodiments, various modifications may be made and components therein may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery (10), comprising:
a battery cell (20), a first wall (21a) of the battery cell (20) being provided with a pressure relief mechanism (213);
a thermal management component (13) configured to regulate the temperature of the battery cell (20), the thermal management component (13) being attached to a second wall (21b) of the battery cell (20), and the second wall (21b) being different from the first wall (21a); and
a bus component (12) configured to be electrically connected to an electrode terminal (214) of the battery cell (20), the electrode terminal (214) being arranged on a third wall (21c) of the battery cell (20), and the third wall (21c) being different from the first wall (21a).

2. The battery (10) according to claim 1, wherein the third wall (21c) is different from the second wall (21b).

3. The battery (10) according to claim 1 or 2, wherein the area of the second wall (21b) is greater than or equal to that of the first wall (21a); and/or
the area of the second wall (21b) is greater than or equal to that of the third wall (21c).

4. The battery (10) according to claim 3, wherein the second wall (21b) is a wall with the largest area of the battery cell (20).

5. The battery (10) according to any one of claims 1 to 4, wherein the battery (10) further comprises:
a box (11), comprising an electrical cavity (111) and a collection cavity (112), wherein the electrical cavity (111) is configured to accommodate the battery cell (20) and the thermal management component (13), and the collection cavity (112) is configured to collect emissions from the battery cell (20) when the pressure relief mechanism (213) is actuated.

6. The battery (10) according to claim 5, wherein the box (11) further comprises a first box wall (114) arranged opposite and spaced apart from the first wall (21a), there is a gap (113) between the first wall (21a) and the first box wall (114), and the gap (113) is configured to form at least part of the collection cavity (112).

7. The battery (10) according to claim 6, wherein a minimum distance (L) between the first wall (21a) and the first box wall (114) is greater than or equal to 7 mm.

8. The battery (10) according to claim 7, wherein the minimum distance (L) between the first wall (21a) and the first box wall (114) is between 7 mm and 25 mm.

9. The battery (10) according to claim 5, wherein the battery (10) further comprises:
an isolation component (15), wherein the isolation component (15) is attached to the first wall (21a), and the isolation component (15) is configured to isolate the electrical cavity (111) from the collection cavity (112).

10. The battery (10) according to any one of claims 1 to 9, wherein the box (11) further comprises a second box wall (115), the second box wall (115) being configured to be fixed to the third wall (21c) such that the battery cell (20) is fixed to the box (11).

11. The battery (10) according to claim 10, wherein the third wall (21c) is fixed to the second box wall (115) via a binder (17).

12. The battery (10) according to any one of claims 1 to 11, wherein the battery (10) comprises a plurality of rows of battery cells (20) arranged in a first direction (X), and each row of battery cells (20) of the plurality of rows of battery cells (20) comprises the at least one battery cell (20) arranged in a second direction (Y), the first direction (X) being perpendicular to the second direction (Y) and the second wall (21b).

13. The battery (10) according to claim 12, wherein the thermal management component (13) is attached to the second wall (21b) of the at least one battery cell (20) of at least one row of battery cells (20) of the plurality of rows of battery cells (20).

14. The battery (10) according to claim 13, wherein the battery cell (20) comprises two second walls (21b) oppositely arranged in the first direction (X), and on two sides of at least one row of battery cells (20) of the plurality of rows of battery cells (20) in the first direction (X), provided are the thermal management components (13) attached to the two second walls (21b) of the at least one battery cell (20) respectively.

15. The battery (10) according to claim 13 or 14, wherein among the plurality of rows of battery cells (20), at least two adjacent rows of battery cells (20) are provided therebetween with the same thermal management component (13).

16. The battery (10) according to any one of claims 12 to 15, comprising a plurality of thermal management components (13) arranged in the first direction (X).

17. The battery (10) according to claim 16, wherein the plurality of thermal management components (13) are arranged at intervals in the first direction (X).

18. The battery (10) according to claim 16 or 17, wherein the thermal management components (13) are each provided with a heat exchange channel (121) for accommodating a heat exchange medium, and the heat exchange channels (121) of the plurality of thermal management components (13) are in communication with each other.

19. The battery (10) according to claim 18, wherein the plurality of thermal management components (13) comprise a first thermal management portion (12a) and second thermal management component (12b) adjacent to each other, wherein the first thermal management component (12a) comprises a first connecting pipe (121a) in communication with the heat exchange channel (121), the second thermal management component (12b) comprises a second connecting pipe (122b) in communication with the heat exchange channel (121), and the first connecting pipe (121a) and the second connecting pipe (122b) are connected to each other, such that the heat exchange channel (121) of the first thermal management component (12a) and the heat exchange channel (121) of the second thermal management component (12b) are in communication with each other.

20. The battery (10) according to claim 19, wherein the first connecting pipe (121a) is arranged in a region of the first thermal management component (12a) that is beyond a row of battery cells (20) in the second direction (Y), the second connecting pipe (122b) is arranged in a region of the second thermal management component (12b) that is beyond the row of battery cells (20) in the second direction (Y), the row of battery cells (20) is a row of battery cells (20) located between the first thermal management component (12a) and the second thermal management component (12b), and the first connecting pipe (121a) and the second connecting pipe (122b) extend in the first direction (X) and are connected to each other.

21. The battery (10) according to claim 20, wherein the box (11) further comprises a support component (117), the support component (117) being configured to support the first connecting pipe (121a) and/or the second connecting pipe (122b).

22. The battery (10) according to claim 21, wherein one side of the support component (117) in a third direction (Z) is configured to have the first connecting pipe (121a) and/or the second connecting pipe (122b) attached thereon, the third direction (Z) being perpendicular to the first direction (X) and the second direction (Y).

23. The battery (10) according to claim 22, wherein one side of the support component (117) in the third direction (Z) is provided with an accommodating groove (117b), the accommodating groove (117b) being configured to accommodate at least part of the first connecting pipe (121a) and/or at least part of the second connecting pipe (122b).

24. The battery (10) according to any one of claims 1 to 23, wherein the first wall (21a) is arranged opposite to the third wall (21c), and the second wall (21b) is connected to the first wall (21a) and the third wall (21c); or
the first wall (21a) is arranged opposite to the second wall (21b), and the third wall (21c) is connected to the first wall (21a) and the second wall (21b).

25. An electrical device, comprising:
the battery (10) of any one of claims 1 to 24, the battery (10) being configured to supply electric energy to the electrical device.
